# FASCICULE DE BREVET EUROPEEN

(11) **EP 2 483 845 B1**
(45) Date de publication et mention de la délivrance du brevet: **09.04.2014**
(21) Numéro de dépôt: 09771358.0
(22) Date de dépôt: 10.12.2009
(51) Int. Cl.: G06K 19/07, G06K 19/073

(54) **DISPOSITIF ELECTRONIQUE PORTABLE MUNI D'UN INTERRUPTEUR OPTIQUE, NOTAMMENT CARTE ELECTRONIQUE**
TRAGBARE ELEKTRONISCHE VORRICHTUNG MIT EINEM OPTISCHEN SCHALTER, IM BESONDEREN EINE ELEKTRONISCHE PLATINE
PORTABLE ELECTRONIC DEVICE PROVIDED WITH AN OPTICAL SWITCH, IN PARTICULAR AN ELECTRONIC BOARD

(30) Priorité: 29.09.2009 WO PCT/EP2009/062631
(43) Date de publication de la demande: 08.08.2012
(73) Titulaire: Nagraid Security S.A., 2301 La Chaux-de-Fonds (CH)
(72) Inventeur: GUILLAUD, Philippe, Los Angeles California 90064 (US); LALO, Cyril, Los Angeles California 90065 (US)
(74) Mandataire: Surmely, Gérard
(86) Numéro de dépôt international: PCT/EP2009/066862
(87) Numéro de publication internationale: WO 2011/038787

(56) Documents cités:
- EP-A2- 2 006 797
- WO-A2-2007/131052
- GB-A- 2 407 189
- US-A1- 2007 040 683

## Description

### Domaine technique

La présente invention concerne le domaine des dispositifs électroniques portables, en particulier des cartes électroniques, munis d'un interrupteur actionnable par un utilisateur pour activer une unité électronique et/ou pour fournir à celle-ci une commande ou une instruction. On remarquera que, dans le cadre de la présente invention, la fonction de l'interrupteur est nullement limitative et peut être notamment relative à l'activation d'une unité électronique ou seulement d'une partie de celle-ci (en particulier pour permettre son alimentation ou son initialisation, ou pour établir une connexion avec une autre unité du dispositif électronique portable), au lancement d'une application ou d'une étape de celle-ci, ou encore à une commande ou une instruction, en particulier pour sélectionner un élément dans une liste affichée séquentiellement ou pour donner un signal de confirmation à une transaction, etc.

### Arrière-plan technologique

On connait des dispositifs électroniques portables munis d'interrupteurs ayant diverses configurations. En général ces interrupteurs sont formés par un dispositif à pression sur lequel l'utilisateur doit exercer une certaine pression pour actionner l'interrupteur, par exemple une touche de clavier ou un bouton-poussoir. Il est également connu qu'un interrupteur peut être réalisé sans l'exercice d'une pression, par exemple sous forme de capteur capacitif sensible à la présence d'un doigt ou de capteur optique sensible à la lumière.

Le document GB 2 407 189 décrit une carte électronique muni d'un capteur de lumière (par exemple une photo-diode) qui sert d'interrupteur automatique pour l'activation de la carte. Cette carte est activée seulement lorsque la photo-diode reçoit de la lumière. Dans le cas contraire, notamment si la carte est mise dans une poche ou un portefeuille, la carte est désactivée.

En particulier dans le cas de cartes électroniques, l'utilisation d'un bouton-poussoir incorporé dans la carte, laquelle présente une zone élastiquement déformable pour activer l'interrupteur, présente certains inconvénients. Premièrement, l'agencement de tels boutons-poussoirs rend la fabrication de cartes plus complexe. Ensuite, la présence d'une zone élastiquement déformable par un doigt d'un utilisateur pose un problème pour obtenir une carte plane avec une surface sans creux ni bosse. De plus, l'activation répétée de l'interrupteur tend à laisser une légère dépression dans la zone du bouton-poussoir. Finalement, un problème majeur provient du fait qu'une carte électronique, notamment du type bancaire, est généralement portée sur soi, de sorte que des pressions involontaires et aléatoires peuvent être exercées sur le bouton-poussoir et ainsi activer de manière intempestive l'interrupteur. Ceci peut poser un problème de consommation électrique ou perturber le bon fonctionnement d'une application de la carte électronique.

### Résumé de l'invention

Un but de la présente invention est de fournir un dispositif électronique portable muni d'un interrupteur actionnable par un utilisateur qui ne présente pas les inconvénients de l'art antérieur susmentionné. En particulier, un but de l'invention est de fournir une carte électronique munie d'un interrupteur actionnable par un utilisateur qui ne nécessite pas une déformation locale de cette carte et qui ne réagisse pas à l'exercice d'une pression.

De manière générale, la présente invention concerne un dispositif électronique portable du type carte électronique comprenant au moins une unité électronique et un interrupteur associé à cette unité électronique et pouvant être activé par un doigt d'un utilisateur, notamment pour l'activer et/ou fournir à celle-ci une commande ou instruction, ce dispositif électronique portable étant caractérisé en ce que ledit interrupteur est formé par deux photo-détecteurs indépendants qui sont orientés pour recevoir de la lumière incidente sur une même face du dispositif électronique portable et suffisamment éloignés l'un de l'autre pour permettre audit utilisateur de couvrir avec son doigt seulement l'un de ces deux photo-détecteurs, et en ce que ledit interrupteur comprend un circuit logique agencé de manière à fournir un signal indiquant l'activation dudit interrupteur seulement lorsqu'un premier signal de réception de lumière et un second signal de réception de lumière fournis respectivement par les deux photo-détecteurs correspondent respectivement à une réception de lumière et à une non-réception de lumière.

Selon une caractéristique particulière de l'invention, les deux photo-détecteurs sont agencés pour fournir un signal de tension dont la valeur varie en fonction de la quantité de lumière reçue.

Selon un mode de réalisation préféré, chacun des deux photo-détecteurs comprend un capteur de lumière et un comparateur. Le comparateur reçoit en entrée un signal de référence et un signal de mesure du capteur de lumière. Il fournit en sortie un signal logique qui se trouve dans un premier état logique lorsque la valeur du signal de mesure est supérieure à celle du signal de référence et dans un second état logique dans le cas contraire. Le signal de sortie du comparateur définit le premier signal, respectivement le second signal de réception de lumière.

Le circuit logique, selon un premier mode de réalisation, est formé par une porte « Ou Exclusif » (XOR) recevant à ses deux entrées respectivement lesdits premier et second signaux.

Le circuit logique selon un deuxième mode de réalisation est formé par une porte « AND » avec un seul inverseur agencé à l'une de ses deux entrées, lesquelles reçoivent respectivement lesdits premier et second signaux.

Selon un mode de réalisation particulier de l'invention, les deux photo-détecteurs sont respectivement agencés dans deux régions opposées de la carte électronique.

Le dispositif électronique portable selon l'invention permet donc d'utiliser un interrupteur optique de manière très efficace grâce au fait que cet interrupteur optique est formé de deux photo-détecteurs indépendants et suffisamment éloignés l'un de l'autre pour permettre à un utilisateur de masquer avec un doigt seulement l'un des deux photo-détecteurs. Lorsque les deux photo-détecteurs reçoivent de la lumière ou lorsqu'ils sont dans l'obscurité et ne reçoivent pas ou peu de lumière, l'interrupteur optique n'est pas activé et reste donc dans un état « OFF ».

On comprend qu'avec un seul photo-détecteur, un interrupteur optique peut difficilement être prévu pour une carte électronique étant donné que la réception de lumière par un seul photo-détecteur peut difficilement être contrôlée par l'utilisateur. Lorsque ce dernier sort par exemple sa carte électronique de son porte-carte, le seul photo-détecteur recevrait alors directement de la lumière ; ce qui actionnerait l'interrupteur avant qu'il ne s'agisse d'une action volontaire de l'utilisateur. La présence de deux photo-détecteurs distants l'un de l'autre permet d'obtenir un interrupteur optique efficace, lequel n'est généralement activé que lorsque l'utilisateur le désire, notamment pour lancer une application du type bancaire.

### Brève description des dessins

D'autres caractéristiques et avantages de la présente invention ressortiront également à la lecture de la description suivante, faite en référence aux dessins annexés, donnés à titre d'exemples nullement limitatifs, dans lesquels :
- la figure 1 montre schématiquement une carte électronique selon l'invention ;
- la figure 2 représente schématiquement un mode de réalisation général d'un interrupteur optique incorporé dans un dispositif électronique portable selon l'invention ;
- la figure 3 représente une variante perfectionnée du mode de réalisation général de la figure 2 ;
- la figure 4 montre un agencement possible pour un convertisseur analogique-digital de la variante représentée à la figure 3 ;
- la figure 5 représente un deuxième mode de réalisation d'un interrupteur optique selon l'invention;
- la figure 6 représente un troisième mode de réalisation perfectionné d'un interrupteur optique selon l'invention ; et
- la figure 7 montre une variante d'agencement des deux photo-détecteurs de l'interrupteur optique dans une carte électronique.

### Description détaillée de modes de réalisation

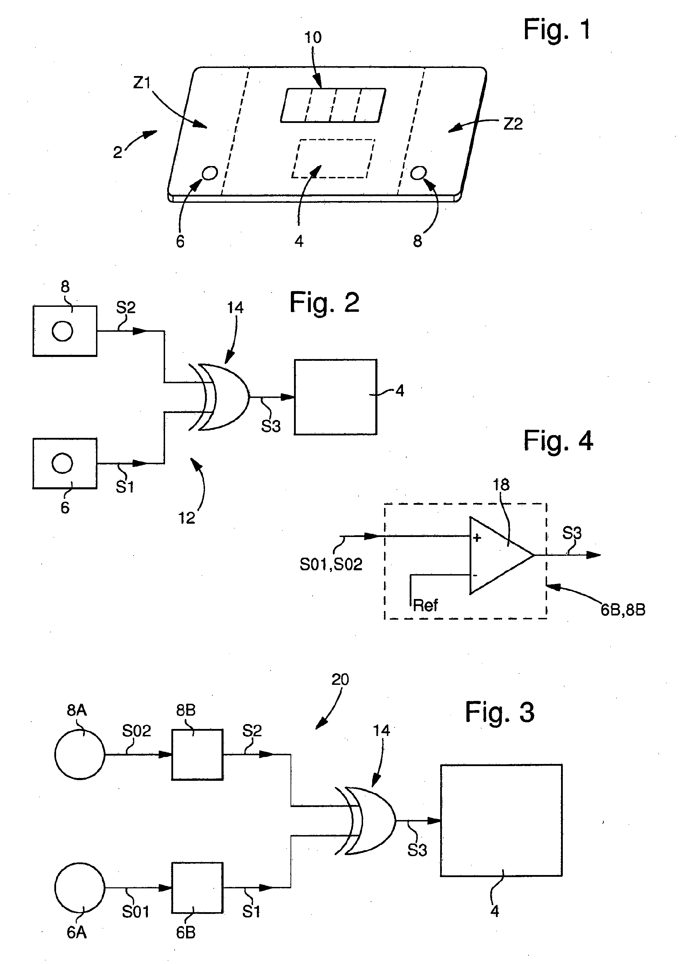

A la Figure 1 est représentée une carte électronique selon la présente invention. Cette carte 2 comprend une unité électronique 4 et un interrupteur actionnable par un utilisateur qui est formé par deux photo-détecteurs indépendants 6 et 8, lesquels sont suffisamment éloignés l'un de l'autre pour permettre à cet utilisateur de couvrir avec un doigt seulement l'un de ces deux photo-détecteurs 6 et 8. Les deux photo-détecteurs sont respectivement agencés dans deux régions opposées Z1 et Z2 de la carte électronique. Cette carte comprend également un affichage digital 10 permettant de donner au moins une information ou une instruction à l'utilisateur. Cet affichage 10 n'est pas nécessaire à la présente invention mais est avantageux pour la mise en oeuvre de plusieurs applications possibles, notamment du type bancaire.

A la Figure 2 est représenté un premier mode de réalisation général de l'interrupteur optique selon l'invention. L'interrupteur optique 12 est associé à une unité électronique 4, notamment pour l'activer ou fournir à celle-ci une commande ou une instruction. Dans la variante représentée, l'interrupteur optique 12 envoie un signal S3 directement à l'unité électronique 4. Toutefois, dans une autre variante non représentée, l'interrupteur optique peut agir sur une liaison entre cette unité électronique 4 et une autre unité électronique ou une antenne. Ainsi, l'interrupteur optique peut agir directement sur une unité électronique en lui donnant un signal digital correspondant à un état « ON » ou « OFF » ou alors agir sur un élément périphérique et notamment sur une simple liaison électrique pouvant être ouverte ou fermée à l'aide de l'interrupteur optique. Ces exemples sont donnés à titre nullement limitatifs. L'interrupteur optique 12 comprend un circuit logique 14 auquel sont fournis un premier signal de réception de lumière S1 et un second signal de réception de lumière S2 qui proviennent respectivement des deux photo-détecteurs 6 et 8. Dans ce premier mode de réalisation, le circuit logique 14 est formé par une porte « OU Exclusif », nommée également porte XOR dans le domaine technique concerné.

Le signal S3 indiquant l'activation de l'interrupteur 12 présente un niveau haut ou état logique « 1 » lorsque le premier signal S1 et le second signal S2 correspondent respectivement à deux états logiques différents pour ce circuit logique 14. Ainsi, selon l'invention, lorsque les deux photo-détecteurs 6 et 8 reçoivent tout deux sensiblement une même quantité de lumière ou sensiblement aucune lumière, l'interrupteur optique 12 n'est pas activé et le signal qu'il fournit correspond à un niveau bas ou état logique « 0 » dans la variante préférée. Cet état logique « 0 » correspond à une position ouverte de l'interrupteur optique 12, c'est-à-dire à un état « OFF ». Lorsque l'utilisateur masque ou couvre seulement l'un des deux photo-détecteurs alors que la carte électronique 2 est dans un environnement lumineux, la porte XOR fournit un signal S3 correspondant à l'état logique « 1 », c'est-à-dire à une position fermée de l'interrupteur correspondant à un état « ON ». Ainsi, le circuit logique 4 reçoit un signal indiquant l'activation de l'interrupteur optique seulement lorsque lesdits premier et second signaux de réception de lumière correspondent à deux états logiques différents de la porte logique XOR.

Lorsque la carte électronique se trouve entièrement dans l'obscurité, notamment à l'intérieur d'un porte-monnaie ou d'un porte-carte, l'interrupteur optique reste continuellement désactivé. De même, lorsque la carte électronique 2 est entièrement située dans un environnement lumineux sans que l'un des deux photo-détecteurs soit masqué, l'interrupteur optique reste également désactivé. Seul une action consistant à masquer ou couvrir l'un des deux photo-détecteurs engendre une activation de l'interrupteur optique 12 et la communication d'une commande ou d'une instruction au système électronique incorporé dans la carte 2.

On notera que dans le premier mode de réalisation de l'invention, ainsi que dans les autres modes de réalisation décrits par la suite, les photo-détecteurs 6 et 8 sont agencés de manière à fournir des signaux de tension dont la valeur varie en fonction de la quantité de lumière reçue. Ainsi, les signaux S1 et S2 sont des signaux de tension appliqués au circuit logique 14. L'homme du métier sait réaliser de tels photo-détecteurs. Les signaux S1 et S2 peuvent être soit des signaux analogiques, soit des signaux digitaux fournis par un convertisseur analogique-digital interne aux photo-détecteurs.

A la Figure 3 est représentée une variante préférée du premier mode de réalisation dans laquelle chaque photo-détecteur est formé par un capteur de lumière 6A, respectivement 8A et par un convertisseur analogique-digital 6B, respectivement 8B fournissant un signal digital S1, respectivement S2. Ainsi, dans cette variante spécifique, les deux capteurs de lumière 6A et 8A fournissent respectivement deux signaux analogiques S01 et S02 aux convertisseurs 6B et 8B. Une variante de réalisation de ces convertisseurs est donnée à la Figure 4. Ils sont simplement constitués d'un comparateur 18 recevant à une entrée positive le signal analogique S01, respectivement S02 et à une entrée négative un signal de référence Ref. Ce signal de référence peut être ajusté ou déterminé de manière que le passage entre un niveau bas et un niveau haut du signal S3 sortant du comparateur 18 corresponde à un certain niveau de réception de lumière par le photo-détecteur correspondant. En particulier, on peut prévoir que le signal S3 indique une activation de l'interrupteur optique 20 seulement lorsque l'un des deux photo-détecteurs reçoit une quantité de lumière correspondant à un niveau d'éclairage suffisant pour qu'un utilisateur puisse lire convenablement l'affichage digital 10. De manière générale, le comparateur fournit en sortie un signal logique qui se trouve dans un premier état lorsque la valeur du signal de mesure est supérieure à celle du signal de référence et dans un second état dans le cas contraire. Le signal logique de sortie du comparateur est fourni au circuit logique 4.

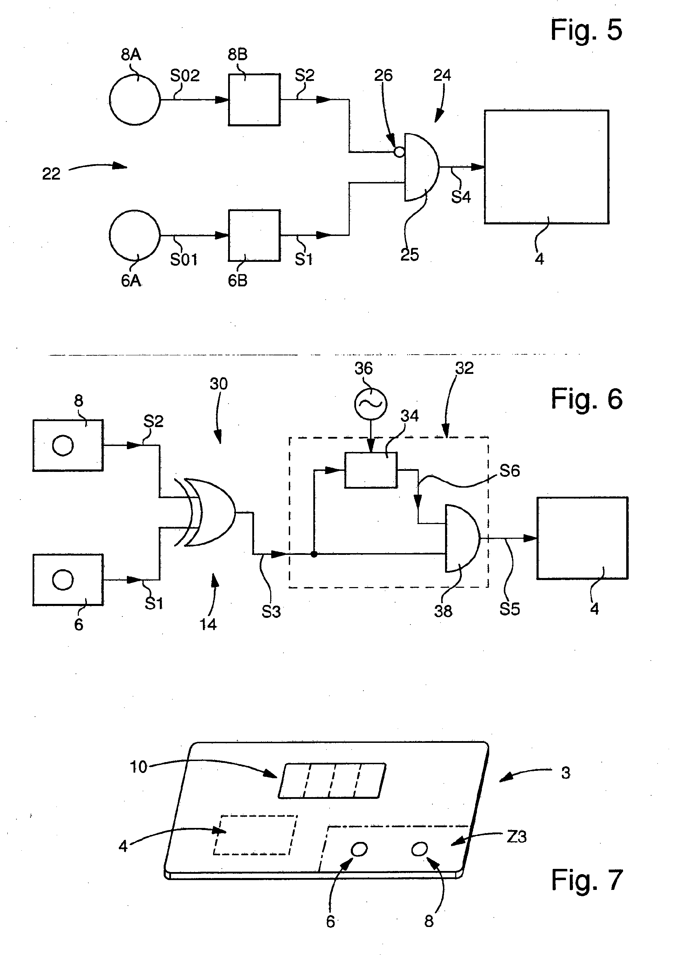

A la Figure 5 est représenté un deuxième mode de réalisation d'un dispositif électronique portable selon l'invention. Les références déjà décrites précédemment ne seront pas décrites ici à nouveau en détail. Ce deuxième mode de réalisation se distingue par le circuit logique 24 différent du circuit logique 14 du premier mode de réalisation. Le circuit logique 24 est formé par une porte « AND » 25 avec l'agencement d'un seul inverseur 26 à l'une de ses deux entrées. Ces deux entrées reçoivent respectivement les signaux logiques S1 et S2. Ainsi, le signal de sortie S4 du circuit logique 24 présente un niveau haut « 1 » seulement lorsque le premier signal S1 correspond à un état logique « 1 » et le second signal S2 correspond à un état logique « 0 ». Par conséquent, au niveau du fonctionnement de l'interrupteur optique 22 selon ce deuxième mode de réalisation, seule une situation où un photo-détecteur déterminé reçoit suffisamment de lumière et l'autre se trouve couvert ou masqué, en particulier par un doigt de l'utilisateur, engendre une activation de cet interrupteur optique 22 et donc un signal de commande S4 correspondant à un signal, « ON » pour l'unité électronique 4.

Dans le premier mode de réalisation, un signal indiquant l'activation de l'interrupteur optique est fourni indifféremment du fait que ce soit le premier photo-détecteur 6 ou le deuxième photo-détecteur 8 qui est masqué alors que l'autre reçoit de la lumière. Dans le cadre du deuxième mode de réalisation, une telle symétrie n'existe pas. Seule une situation où le photo-détecteur 6 reçoit de la lumière alors que le photo-détecteur 8 n'en reçoit pas résulte en une activation de l'interrupteur optique. La variante représentée à la Figure 5 pourrait correspondre avantageusement à l'agencement d'une carte électronique prévue pour une personne utilisant normalement la main gauche. Ainsi, lorsque cette personne saisit la carte électronique, si son doigt couvre ou masque le photo-détecteur 6 situé dans la zone Z1 (figure 1) aucune activation de l'interrupteur optique ne sera engendrée. Ceci permet avantageusement d'éviter que l'interrupteur optique soit actionné de manière involontaire par un utilisateur qui saisit la carte électronique par sa main gauche. On comprend donc que l'on peut définir avantageusement des cartes pour personnes dites gauchères et des cartes pour d'autres personnes dites droitières, c'est-à-dire qui utilisent généralement leur main droite. Dans ce dernier cas, on inversera simplement les entrées du circuit logique 24 de sorte que l'inverseur 26 reçoit le premier signal S1.

A l'aide de la figure 6, on décrira ci-après un troisième mode de réalisation de l'invention. Ce mode perfectionné de l'invention sert à résoudre un problème pouvant survenir dans le cadre des premier et deuxième modes de réalisation. En effet, pour que l'interrupteur optique soit efficace, il est nécessaire d'éviter au maximum qu'il soit activé de manière involontaire. Or, lors de certaines manipulations de la carte électronique, la transition entre un environnement éclairé et un environnement sombre peut présenter un certain décalage temporel pour les deux photo-détecteurs. En effet, selon l'agencement des deux photo-détecteurs au sein de la carte électronique, notamment comme représenté à la figure 1, il est possible que, lors de l'introduction de cette carte électronique dans un porte-carte ou dans une poche d'un vêtement notamment, l'un des deux photo-détecteurs soit couvert avant le second. Ces périodes de transition entre un environnement obscure et un environnement lumineux, généralement de relativement courte durée, peuvent engendrer une activation involontaire de l'interrupteur optique. Pour résoudre ce problème, le mode de réalisation perfectionné de la figure 6 prévoit l'agencement d'un circuit de retard 32 dans l'interrupteur optique 30.

Dans la variante représentée, le circuit de retard 32, donné à titre d'exemple nullement limitatif, est agencé suite au circuit logique 14. Ce circuit de retard reçoit donc un signal logique S3 indiquant si les deux photo-détecteurs 6 et 8 ont des états logiques différents. Le signal S3 est, d'une part, fourni directement à une entrée d'une porte logique « AND » 38 et, d'autre part, à un compteur à N, référencé 34. Ce compteur 34 est cadencé par un signal d'horloge 36. Le signal de sortie du compteur est fourni à la seconde entrée de la porte logique 38. Le compteur 34 est agencé de manière qu'il demeure à la valeur de remise à zéro tant que le signal S3 reçu à son entrée correspond à un niveau bas, c'est-à-dire à un état logique « 0 ». Dès que le signal logique S3 passe à un niveau haut, c'est-à-dire à un état logique « 1 », le compteur est incrémenté jusqu'à la valeur N. De préférence il demeure à cette valeur N tant que le signal d'entrée S3 présente un niveau haut. Le signal de sortie S6 du compteur 34 correspond à un état logique « 0 » tant que ce compteur a une valeur inférieure à la valeur N. Seulement lorsque ce compteur présente la valeur N, ce signal S6 correspond à un état logique « 1 ».

La porte logique « AND » fournit un signal logique S5 indiquant l'activation de l'interrupteur optique 30 à l'unité électronique 4 dès que le signal S6 passe dans l'état logique « 1 ». Ainsi ce signal logique S5 a un niveau logique « 1 » seulement lorsque le compteur 34 atteint la valeur correspondant à N. Pour être incrémenté de la valeur zéro jusqu'à la valeur N, le compteur 34 fonctionne durant une certaine période de temps T déterminée par le signal d'horloge qui cadence ce compteur. Par conséquent, tant que les deux photo-détecteurs 6 et 8 ne se trouvent pas dans un état logique différent depuis au moins cette période de temps déterminée T définissant un délai ou un retard dans l'activation de l'interrupteur optique 30, le signal S5 fourni à l'unité électronique 4 correspond à un signal de commande « Off », c'est-à-dire à un état désactivé pour l'interrupteur optique. Ce dernier n'est donc activé par un utilisateur que lorsque les deux photo-détecteurs 6 et 8 fournissent respectivement des premier et second signaux correspondant à deux états logiques différents depuis une durée supérieure à la période de temps ou au délai T. Si les états logiques différents durent une période inférieure à ladite période de temps T, le signal S3 fourni par le circuit logique 14 passe à nouveau à l'état logique « 0 » avant que le compteur 34 atteigne la valeur maximale N. Ceci engendre une remise à zéro de ce compteur avant qu'il atteigne cette valeur N et le signal S6 reste donc dans un état logique « 0 ». Le signal S6 définit donc un signal d'inhibition empêchant l'activation de l'interrupteur optique durant un délai déterminé. Cet interrupteur n'est pas activé dans une période initiale après le début d'une situation extérieure correspondant à une situation normale d'activation pour l'interrupteur, à savoir une réception de lumière différenciée par les deux photo-détecteurs.

En résumé, le circuit de retard 32 est agencé de manière à fournir le signal indiquant l'activation de l'interrupteur optique à l'unité électronique 4 que lorsque les deux états logiques différents des deux signaux logiques S1 et S2 ont duré simultanément plus longtemps qu'une période de référence. Le compteur prévu dans le circuit de retard est remis à zéro dès que les premier et second signaux de réception de lumière S1 et S2 correspondent à un même état logique. Le compteur est activé dès que ces premier et second signaux ont un état logique différent et délivre un signal d'inhibition tant qu'il n'a pas atteint un certain niveau donné. On notera que le signal d'inhibition peut conserver l'état logique « 1 » tant que le compteur reste à la valeur N (l'état logique « 1 » correspondant ici à un état non inhibé) ou on peut prévoir qu'il ne fournisse qu'une impulsion de durée limitée. D'autres variantes et alternatives peuvent être prévues par l'homme du métier.

A la figure 7 est représentée une variante dans l'agencement des photo-détecteurs 6 et 8 au sein de la carte électronique 3. Cette variante permet de résoudre en partie le problème mentionné en relation avec les premier et second modes de réalisation. Contrairement à la variante de la figure 1, les photo-détecteurs 6 et 8, plus particulièrement les capteurs de lumière formant ces photo-détecteurs, sont agencés dans une même région Z3 de la carte électronique 3. Ainsi, en étant agencés relativement proches l'un de l'autre, la période temporelle durant laquelle les deux photo-détecteurs peuvent se trouver dans une situation différente, c'est-à-dire respectivement couvert et exposé à la lumière, devient en général plus courte. Par contre, la carte 3 demande une manipulation plus attentive de la part de l'utilisateur pour qu'il évite de couvrir simultanément les deux photo-détecteurs 6 et 8 lors de la manipulation de la carte. On peut ainsi rapprocher les deux photo-détecteurs tout en restant dans le cadre de la présente invention, en prévoyant toutefois un agencement dans lequel les deux photo-détecteurs sont suffisamment éloignés l'un de l'autre pour permettre à l'utilisateur de couvrir notamment avec un doigt seulement l'un de ces deux photo-détecteurs. D'autres variantes dans l'agencement des deux-photo-détecteurs peuvent être aisément prévues par l'homme du métier. Par exemple il est possible d'agencer les deux photo-détecteurs dans deux régions opposées l'une à l'autre selon une diagonale de la carte.

## Revendications

1. Dispositif électronique portable du type carte électronique (2,3) comprenant au moins une unité électronique (4) et un interrupteur (12,20,22,30) associé à cette unité électronique et pouvant être activé par un doigt d'un utilisateur, notamment pour l'activer et/ou fournir à celle-ci une commande ou instruction, **caractérisé en ce que** ledit interrupteur est formé par deux photo-détecteurs indépendants (6,8) qui sont orientés pour recevoir de la lumière incidente sur une même face du dispositif électronique portable et suffisamment éloignés l'un de l'autre pour permettre audit utilisateur de couvrir avec son doigt seulement l'un de ces deux photo-détecteurs, et **en ce que** ledit interrupteur comprend un circuit logique (14,24) agencé de manière à fournir un signal (S3,S4,S5) indiquant l'activation dudit interrupteur seulement lorsqu'un premier signal de réception de lumière (S1) et un second signal de réception de lumière (S2) fournis respectivement par les deux photo-détecteurs correspondent respectivement à une réception de lumière et à une non-réception de lumière.

2. Dispositif électronique portable selon la revendication 1, **caractérisé en ce que** les deux photo-détecteurs sont agencés pour fournir un signal de tension dont la valeur varie en fonction de la quantité de lumière reçue.

3. Dispositif électronique portable selon la revendication 1 ou 2, **caractérisé en ce que** chacun des deux photo-détecteurs comprend un capteur de lumière (6A,8A) et un comparateur (18), ce comparateur recevant en entrée un signal de référence et un signal de mesure (S01,S02) du capteur de lumière et fournissant en sortie un signal logique qui se trouve dans un premier état logique lorsque la valeur dudit signal de mesure est supérieure à celle dudit signal de référence et dans un second état logique dans le cas contraire, le signal de sortie dudit comparateur définissant ledit premier signal, respectivement ledit second signal de réception de lumière.

4. Dispositif électronique portable selon la revendication 2 ou 3, **caractérisé en ce que** ledit circuit logique (14) est formé par une porte 'OU Exclusif' (XOR) recevant à ses deux entrées respectivement lesdits premier et second signaux de réception de lumière.

5. Dispositif électronique portable selon la revendication 2 ou 3, **caractérisé en ce que** ledit circuit logique (24) est formé par une porte 'AND' avec un seul inverseur agencé à l'une de ses deux entrées, lesquelles reçoivent respectivement lesdits premier et second signaux de réception de lumière.

6. Dispositif électronique portable selon l'une des revendications précédentes, **caractérisé en ce que** ledit interrupteur (30) comprend un circuit de retard (32) agencé de manière à fournir ledit signal (S5) indiquant l'activation de cet interrupteur que lorsque lesdits deux états logiques différents ont duré simultanément plus longtemps qu'une période de référence.

7. Dispositif électronique portable selon la revendication 6, **caractérisé en ce que** ledit circuit de retard (32) comprend un compteur (34) recevant un signal d'horloge (36) et remis à zéro dès que lesdits premier et second signaux de réception de lumière (S1,S2) correspondent à un même état logique, le compteur étant activé dès que ces premier et second signaux ont ledit état logique différent et délivrant un signal d'inhibition (S6) tant qu'il n'a pas atteint un certain niveau.

8. Dispositif électronique portable selon l'une des revendications précédentes, **caractérisé en ce qu'**il constitue une carte électronique du type bancaire.

9. Dispositif électronique portable selon la revendication 7, **caractérisé en ce que** les deux photo-détecteurs sont respectivement agencés dans deux régions opposées (Z1,Z2) de la carte électronique.

10. Dispositif électronique portable selon la revendication 7, **caractérisé en ce que** les deux photo-détecteurs sont agencés dans une même région (Z3) de la carte électronique.

## Patentansprüche

1. Tragbare elektronische Vorrichtung des Typs elektronische Karte (2, 3), die wenigstens eine elektronische Einheit (4) und einen dieser elektronischen Einheit zugeordneten Ein/Aus-Schalter (12, 20, 22, 30), der durch einen Finger eines Anwenders aktiviert werden kann, um sie insbesondere zu aktivieren und/oder um an sie einen Befehl oder eine Anweisung zu liefern, umfasst, **dadurch gekennzeichnet, dass** der Ein/AusSchalter durch zwei unabhängige Photodetektoren (6, 8) gebildet ist, die orientiert sind, um das auftreffende Licht auf derselben Fläche der tragbaren elektronischen Vorrichtung zu empfangen, die ausreichend voneinander entfernt sind, um dem Anwender zu ermöglichen, mit seinem Finger nur einen dieser zwei Photodetektoren abzudecken, und dass der Ein/AusSchalter eine Logikschaltung (14, 24) umfasst, die dafür ausgelegt ist, ein Signal (S3, S4, S5), das die Aktivierung des Ein/Aus-Schalters angibt, nur dann zu liefern, wenn ein erstes Lichtempfangssignal (S1) und ein zweites Lichtempfangssignal (S2), die von den zwei jeweiligen Photodetektoren geliefert werden, einem Empfang von Licht bzw. einem Nichtempfang von Licht entsprechen.

2. Tragbare elektronische Vorrichtung nach Anspruch 1, **dadurch gekennzeichnet, dass** die zwei Photodetektoren dafür ausgelegt sind, ein Spannungssignal zu liefern, dessen Wert sich als Funktion der empfangenen Lichtmenge ändert.

3. Tragbare elektronische Vorrichtung nach Anspruch 1 oder 2, **dadurch gekennzeichnet, dass** jeder der zwei Photodetektoren einen Lichtsensor (6A, 8A) und einen Komparator (18) umfasst, wobei dieser Komparator am Eingang ein Referenzsignal und ein Messsignal (S01, S02) des Lichtsensors empfängt und am Ausgang ein Logiksignal liefert, das sich in einem ersten logischen Zustand befindet, wenn der Wert des Messsignals größer als jener des Referenzsignals ist, und sich im entgegengesetzten Fall in einem zweiten logischen Zustand befindet, wobei das Ausgangssignal des Komparators das erste bzw. das zweite Lichtempfangssignal definiert.

4. Tragbare elektronische Vorrichtung nach Anspruch 2 oder 3, **dadurch gekennzeichnet, dass** die Logikschaltung (14) durch ein Exklusiv-ODER-Gatter (XOR-Gatter) gebildet ist, das an seinen zwei Eingängen das erste bzw. das zweite Lichtempfangssignal empfängt.

5. Tragbare elektronische Vorrichtung nach Anspruch 2 oder 3, **dadurch gekennzeichnet, dass** die Logikschaltung (24) gebildet ist durch ein UND-Gatter mit einem einzigen Inverter, der an einem seiner zwei Eingänge, die das erste bzw. das zweite Lichtempfangssignal empfangen, angeordnet ist.

6. Tragbare elektronische Vorrichtung nach einem der vorhergehenden Ansprüche, **dadurch gekennzeichnet, dass** der Ein/AusSchalter (30) eine Verzögerungsschaltung (32) umfasst, die dafür ausgelegt ist, das Signal (S5), das die Aktivierung dieses Ein/Aus-Schalters angibt, nur zu liefern, wenn die zwei verschiedenen logischen Zustände gleichzeitig länger als eine Referenzperiode gedauert haben.

7. Tragbare elektronische Vorrichtung nach Anspruch 6, **dadurch gekennzeichnet, dass** die Verzögerungsschaltung (32) einen Zähler (34) umfasst, der ein Takt- und Nullrücksetz-Signal (36) empfängt, sobald das erste und das zweite Lichtempfangssignal (S1, S2) demselben logischen Zustand entsprechen, wobei der Zähler aktiviert wird, sobald dieses erste und dieses zweite Signal einen unterschiedlichen logischen Zustand haben, und ein Sperrsignal (S6) liefert, solange er keinen bestimmten Stand erreicht hat.

8. Tragbare elektronische Vorrichtung nach einem der vorhergehenden Ansprüche, **dadurch gekennzeichnet, dass** sie eine elektronische Bankkarte bildet.

9. Tragbare elektronische Vorrichtung nach Anspruch 7, **dadurch gekennzeichnet, dass** die zwei Photodetektoren in zwei einander gegenüberliegenden Bereichen (Z1, Z2) der elektronischen Karte angeordnet sind.

10. Tragbare elektronische Vorrichtung nach Anspruch 7, **dadurch gekennzeichnet, dass** die zwei Photodetektoren im selben Bereich (Z3) der elektronischen Karte angeordnet sind.

## Claims

1. Portable electronic device of the electronic card type (2, 3) including at least one electronic unit (4) and one switch (12, 20, 22, 30) which is associated with said electronic unit and can be actuated by a user's finger, particularly to activate and/or supply the electronic unit with a command or instruction, **characterized in that** said switch is formed by two independent photo-detectors (6, 8) which are oriented to receive incident light on a same surface of the portable electronic device and which are sufficiently far from each other to enable said user to cover only one of said two photo-detectors with one finger, and **in that** said switch includes a logic circuit (14, 24), arranged to supply a signal (S3, S4, S5) which only indicates actuation of said switch when a first light reception signal (S1) and a second light reception signal (S2), respectively supplied by the two photo-detectors, respectively correspond to reception of light or non-reception of light.

2. Portable electronic device according to claim 1, **characterized in that** the two photo-detectors are arranged to supply a voltage signal whose value varies according to the quantity of light received.

3. Portable electronic device according to claim 1 or 2, **characterized in that** each of the two photo-detectors includes a light sensor (6A, 8A) and a comparator (18), said comparator receiving at input a reference signal and a measuring signal (S01, S02) from the light sensor and supplying at output a logic signal, which is in a first logic state when the value of said measuring signal is higher than that of said reference signal and otherwise is in a second logic state, the output signal from said comparator defining said first signal, and said second light reception signal respectively.

4. Portable electronic device according to claim 2 or 3, **characterized in that** said logic circuit (14) is formed by an Exclusive OR (XOR) gate receiving at the two inputs thereof said first and second light reception signals respectively.

5. Portable electronic device according to claim 2 or 3, **characterized in that** said logic circuit (24) is formed by an AND gate with a single inverter arranged at one of the two inputs thereof, which respectively receive said first and second light reception signals.

6. Portable electronic device according to any of the preceding claims, **characterized in that** said switch (30) includes a delay circuit (32) arranged to supply said signal (S5) indicating actuation of said switch when said two different logic states have simultaneously lasted for longer than a reference period.

7. Portable electronic device according to claim 6, **characterized in that** said delay circuit (32) includes a counter (34) receiving a clock signal (36) which is reset to zero as soon as said first and second light reception signals (S1, S2) correspond to the same logic state, wherein the counter is activated as soon as said first and second signals have said different logic state and supplies an inhibition signal (S6) until said counter has reached a certain level.

8. Portable electronic device according to any of the preceding claims, **characterized in that** it forms an electronic bank card.

9. Portable electronic device according to claim 7, **characterized in that** the two photo-detectors are respectively arranged in two opposite areas (Z1, Z2) of the electronic card.

10. Portable electronic device according to claim 7, **characterized in that** the two photo-detectors are arranged in the same area (Z3) of the electronic card.
